Europäisches Patentamt

(19) European Patent Office    (11) Publication number: **0 194 029**
Office européen des brevets    **B1**

## (12) EUROPEAN PATENT SPECIFICATION

(45) Date of publication of the patent specification:    (51) Int. Cl.⁴: **F 04 C 29/10**
05.07.89

(21) Application number: **86300688.8**

(22) Date of filing: **31.01.86**

(54) A method of, and apparatus for, controlling the capacity of a variable capacity compressor.

(30) Priority: **01.02.85 JP 16397/85**

(43) Date of publication of application:
**10.09.86 Bulletin 86/37**

(45) Publication of the grant of the patent:
**05.07.89 Bulletin 89/27**

(84) Designated Contracting States:
**DE FR GB IT SE**

(56) References cited:
**EP-A- 0 085 247**
**EP-A- 0 087 770**
**CH-A- 173 493**

(73) Proprietor: **SANDEN CORPORATION, 20 Kotobuki-cho, Isesaki-shi Gunma-ken (JP)**

(72) Inventor: **Sato, Motoharu, 3-11-38 OjimaMinami, Honjo-shi Saitama 367 (JP)**

(74) Representative: **Jackson, Peter Arthur et al, GILL JENNINGS & EVERY 53-64 Chancery Lane, London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to controlling the capacity of a variable capacity type compressor in an air conditioning system, particularly for use in automobiles, and more particularly, to apparatus which controls the capacity of the compressor in accordance with the air conditioning load.

Generally, the air conditioning system of an automobile is driven by the vehicle engine through an electromagnetic clutch. The air conditioning system is designed to achieve a predetermined air conditioning performance at a predetermined air conditioning load when the automobile is driven at an average speed. Thus, when the vehicle engine is idling or is being driven at low speeds, the rotational speed of the compressor is correspondingly low. Therefore, the performance of the air conditioning system is adversely effected. On the other hand, when the vehicle is driven at high speeds, the rotational speed of the compressor is too high for efficient performance. Thus, electromagnetic clutches are used to control the rotational speed of the compressor under varying drive speeds by intermittently stopping and starting the compressor.

However, there are many problems associated with continuously cycling the clutch on and off. For example, when the engine is driven at high speeds and the capacity of the air conditioning system is large, it is necessary for the electromagnetic clutch to be turned on and off frequently. On the other hand, at low speeds or when the vehicle engine is idling, the compressor is not sufficiently driven to maintain the desired temperature in the vehicle.

In order to solve the abovementioned problems, a system which controls the capacity of a compressor by detecting the temperature at the outlet side of the air conditioning system evaporator is proposed in published Japanese Patent Application JP-A 58-30. In such a system, the performance of the air conditioning system is not directly detected. For example, even though the temperature in the inside of the vehicle may be high, the capacity of the air conditioning system is reduced when the temperature at the outlet side of the evaporator becomes lower than a predetermined temperature. Thus, the capacity of the system is insufficient to cool the vehicle. In addition, when the vehicle is running, the capacity of the air conditioning system is changed frequently, thereby placing great stress and strain on the air conditioning system.

EP-A-0 087 770 discloses an air conditioning system in which the control apparatus senses the air temperature immediately downstream of the evaporator for use in controlling the capacity of the variable capacity compressor. Alternatively, the temperature upstream of the evaporator may be measured, as in CH-A-173 493.

It is the overall object of the present invention to provide an apparatus for and method of controlling the capacity of a variable type compressor so that an associated automotive air conditioning system may be made more reliable and durable, but without increasing the complexity or cost of the system.

Generally, the above object is achieved by providing a control apparatus which includes a first temperature detecting sensor disposed downstream of an evaporator for detecting a first air temperature at the outlet side of the evaporator and a control unit for comparing the detected first air temperature with a first predetermined temperature and controlling, in accordance with the comparison result, the capacity of a compressor connected to the evaporator, characterised in that the control apparatus further includes a second temperature detecting sensor disposed upstream of the evaporator for detecting a second air temperature at the inlet side of the evaporator, and the control unit is arranged to compare the detected second air temperature with a second predetermined temperature and to control the capacity of the compressor in accordance with both comparison results.

The present invention includes an apparatus for controlling the capacity of a variable capacity compressor connected to an evaporator and having a compressor capacity changing means, the apparatus comprising a first temperature detector means disposed, in use, in an airstream in thermal contact with the evaporator so as to detect a first air temperature downstream of the evaporator; and a control means for controlling the capacity changing means, the control means including a first comparison means for comparing a first predetermined temperature with the first air temperature and providing a first indication when the first air temperature is higher than the first predetermined temperature; characterised in that the apparatus further comprises a second temperature detecting means disposed, in use, in the airstream so as to detect a second air temperature upstream of the evaporator; and in that the control means further includes a second comparison means for comparing the difference between the second air temperature and a second predetermined temperature with a predetermined temperature difference in response to the comparison by the first comparison means and the presence of the first indication, the second comparison means providing a second indication when the difference in temperature is greater than the predetermined temperature difference, wherein, in response to the second indication, the capacity changing means ensures that the capacity of the compressor is a large capacity; a third comparison means for comparing the second air temperature with the second predetermined temperature in response to the comparison by the second comparison means and the absence of the second indication, the third comparison means providing a third indication when the second air temperature is higher than the second predetermined temperature, wherein in response to the third indication a third predetermined temperature is set to a first temperature and in the absence of the third indication the third predetermined temperature is set to a second temperature; a fourth comparison means for comparing the first air temperature with the set third predetermined temperature and providing a fourth indication when the third predetermined temperature is higher than the first air temperature, wherein, in the absence of the fourth indication, the capacity changing means ensures that the capacity of the compressor is the large capacity; a fifth comparison means for comparing the first air temperature with a fourth predetermined temperature in response to the comparison by the fourth comparison means and the presence of the fourth indication, the fifth comparison means providing a fifth indication when the first air temperature is higher than the fourth predetermined temperature, wherein, in response to the absence of the fifth indication, the capacity changing means ensures that the capacity of the compressor is a small capacity; and a sixth comparison means for comparing the first air temperature with a fifth predetermined temperature in response to the comparison by the fifth comparison means and the absence of the fifth indication, the sixth comparison means providing a sixth indication when the first air temperature is higher than the fifth predetermined temperature, wherein, in response to the absence of the sixth indication, the capacity changing means stops the operation of the compressor.

The present invention also includes a method of controlling a compressor capacity changing means of a variable capacity compressor connected to an evaporator in thermal contact with an airstream, the method comprising the steps of detecting a first air temperature downstream of the evaporator; and comparing a first predetermined temperature with the first air temperature and providing a first indication when the first air temperature is higher than the first predetermined temperature; characterised in that the method further comprises the steps of detecting a second air temperature upstream of the evaporator; comparing the difference between the second air temperature and a second predetermined temperature with a predetermined temperature difference in response to the presence of the first indication, providing a second indication when the difference in temperature is greater than the predetermined temperature difference, and, in response to the second indication, controlling the capacity changing means to ensure that the capacity of the compressor is a large capacity; comparing the second air temperature with the second predetermined temperature in response to the absence of the second indication, and providing a third indication when the second air temperature is higher than the second predetermined temperature, and, in response to the third indication, setting a third predetermined temperature to a first temperature or, in the absence of the third indication, setting the third predetermined temperature to a second temperature; comparing the first air temperature with the set third predetermined temperature, providing a fourth indication when the third predetermined temperature is higher than the first air temperature, and, in the absence of the fourth indication, controlling the capacity changing means to ensure that the capacity of the compressor is the large capacity; comparing the first air temperature with a fourth predetermined temperature in response to the presence of the fourth indication, providing a fifth indication when the first air temperature is higher than the fourth predetermined temperature, and, in response to the absence of the fifth indication, controlling the capacity changing means to ensure that the capacity of the compressor is a small capacity; and comparing the first air temperature with a fifth predetermined temperature in response to the absence of the fifth indication, providing a sixth indication when the first air temperature is higher than the fifth predetermined temperature, and, in response to the absence of the sixth indication, controlling the capacity changing means to stop the operation of the compressor.

Preferably, the indications are control signals arranged so that the presence or absence of an indication corresponds to the presence or absence respectively of the respective control signal.

Normally, the temperatures of the predetermined temperatures will be arranged to increase from the fifth to the first to the fourth to the third to the second predetermined temperature. Also, the first temperature associated with the third predetermined temperature is preferably less than the second temperature associated with the third predetermined temperature.

The invention will now be described by way of example with reference to the accompanying drawings, in which:

Figure 1 is a block diagram of an automotive air conditioning system utilizing the present invention;

Figure 2 is a flow chart illustrating the operation of the control system;

Figure 3 is a graph illustrating the relationship between a high air conditioning load and normal vehicle speed;

Figure 4 is a graph illustrating the relationship between a high air conditioning load and high vehicle speed;

Figure 5 is a graph illustrating the relationship between a low air conditioning load and normal vehicle speed; and,

Figure 6 is a graph illustrating the relationship between a low air conditioning load and high vehicle speed.

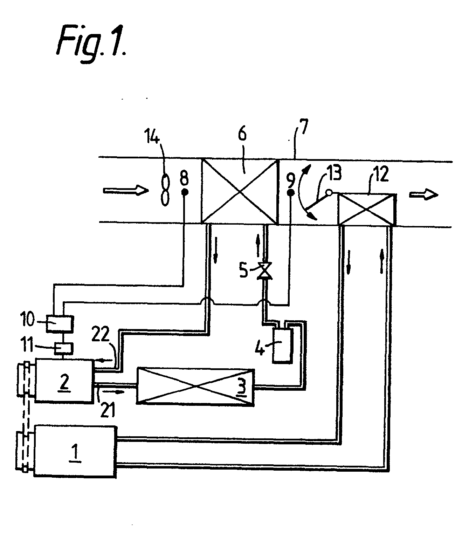

With reference to Figure 1, there is shown an automotive air conditioning system which is driven by an engine 1. The air conditioning system comprises a compressor 2, a condenser 3, a receiver-dryer 4, an expansion valve 5 and an evaporator 6 located between an outlet port 21 and an inlet port 22. The compressor 2 is driven by the engine 1 and is a variable capacity compressor of the scroll type or swash plate type. The capacity of the compressor 2 can be varied by operating a capacity changing mechanism 11 upon a signal from a control unit 10. Where the compressor 2 is of the scroll type, the capacity changing mechanism 11 comprises an electromagnetic bypass valve which connects the inlet of the compressor to the intermediate fluid pockets through an intermediate chamber as shown in published Japanese Patent Application JP-A-57-148 089.

As shown in Figure 1, the evaporator 6 is disposed in a duct 7. A sensor 8 is disposed at the inlet side of the evaporator 6 and a sensor 9 is disposed at the outlet side of the evaporator 6. The sensors 8 and 9 are connected to the control unit 10. The control unit 10 compares the detected temperature valves with predetermined values and then sends appropriate capacity control signals to the capacity changing mechanism 11 to effect a change in the capacity of the compressor or to start or stop the operation of the compressor.

A heater 12 disposed in the duct 7 is connected to the engine 1 and receives coolant from the engine 1 for heating the vehicle when the outside temperature is cold.

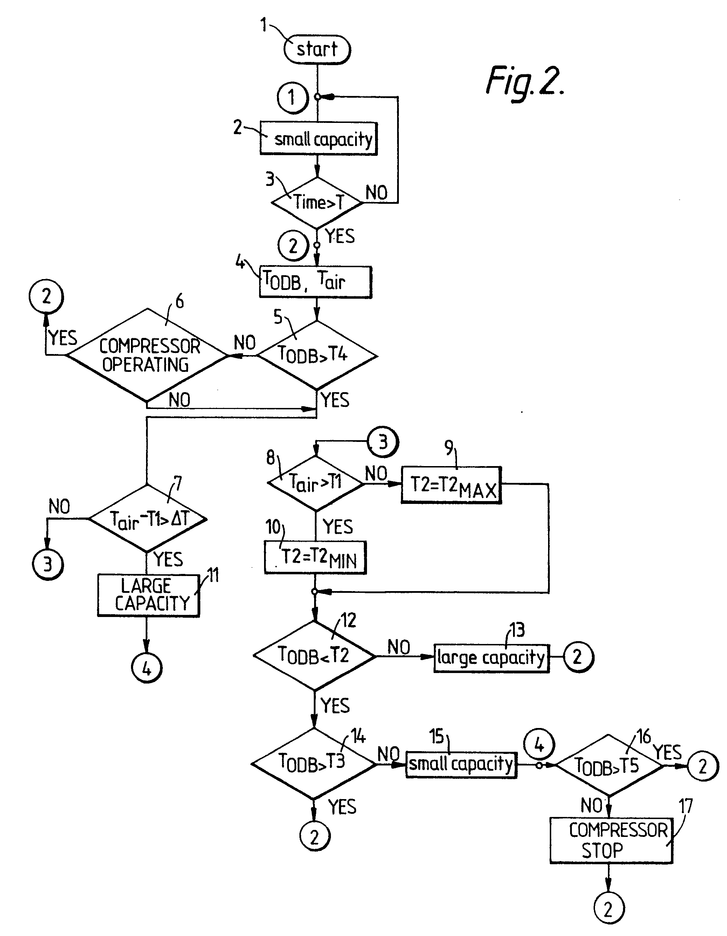

A damper 13 disposed upstream of the heater 12 controls the temperature of the discharged air by the angle of its opening being controlled. A blower 14 is also disposed upstream of the evaporator 6. With reference to Figure 2, there is shown a flow chart which illustrates the operation of the control unit 10. The circled reference numerals indicate connections between various parts of the flow chart.

When the air conditioning system is turned on in step 1, the compressor 2 is operated at a predetermined small capacity (step 2). After the air conditioning system is operated for a predetermined time T (step 3), control passes to step 4. In the present invention time T is preferably less than five seconds, e.g. three seconds. In step 4, temperature $T_{ODB}$ is detected by the sensor 9 at the outlet side of evaporator 6 and temperature $T_{air}$ is detected by the sensor 8 at the inlet side of the evaporator 6. Temperature $T_{ODB}$ is compared to a predetermined temperature T4 in step 5. If the temperature $T_{ODB}$ is higher than temperature T4, control passes to step 7. If temperature $T_{ODB}$ is equal to or lower than the temperature T4 control passes to step 6.

In step 6, a determination is made whether the compressor 2 is operating. If the compressor 2 is operating, control passes back to step 4. If however, compressor 2 is not operating, control passes to step 7.

In step 7, a predetermined temperature T1 is substracted from the temperature $T_{air}$ detected by the sensor 8 and the resulting temperature is compared with a predetermined temperature difference ΔT. If the resulting temperature is greater than the temperature difference ΔT, control passes to step 11 where the capacity of the compressor is set at a large capacity. Control is then passed to step 16. If the resulting temperature is not greater than the temperature difference ΔT, control is passed to step 8.

In step 8, the temperature $T_{air}$ is compared to the predetermined temperature T1 and if $T_{air}$ is greater than T1, control passes to step 10. Otherwise, control passes to step 9. In step 10, a predetermined temperature T2 is set equal to $T2_{MIN}$ and control is passed to step 12. In step 9, the predetermined temperature T2 is set equal to $T2_{MAX}$ and control is also passed to step 12.

In step 12, the temperature $T_{ODB}$ is compared to temperature T2 and if T2 is greater than $T_{ODB}$, control is passed to step 14 otherwise control is passed to step 13. In step 13, the capacity of the compressor 2 is set at the large capacity and control returns to step 4. In step 14, the temperature $T_{ODB}$ is compared to a predetermined temperature T3 and if $T_{ODB}$ is less than T3, control is passed to step 15. In step 15, the capacity of the compressor 2 is set at a small capacity and control passes to step 16.

In step 16, temperature $T_{ODB}$ is compared to a predetermined temperature T5 and if $T_{ODB}$ is greater than T5 control is returned to step 4. Otherwise, control is passed to step 17. In step 17, the operation of the compressor is stopped, e.q. by deactivating the electromagnetic clutch. Control is then returned to step 4.

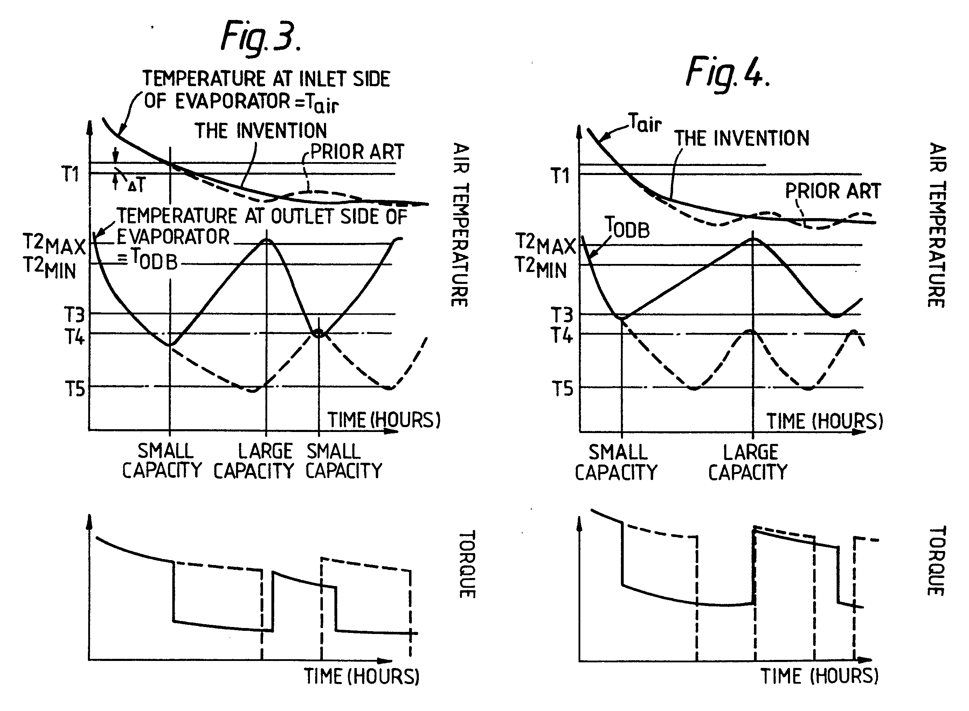

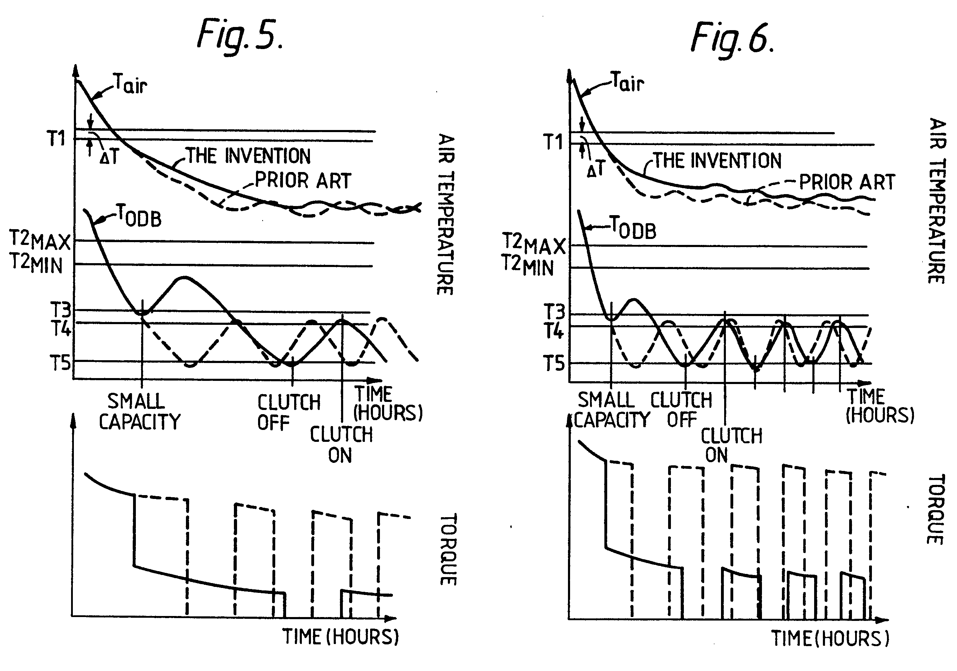

Figures 3, 4, 5 and 6 show the relationship between air conditioning load, temperature and compressor torque over time. The solid lines represent a compressor controlled in the manner of the present invention and the dotted lines represent a compressor controlled in the manner known in the prior art by cycling the electromagnetic clutch. As the Figures clearly show, the present invention provides an air conditioning system which is more efficient in its operation and more responsive to variations than such system known in the art.

## Claims

1. A control apparatus including a first temperature detecting sensor (9) disposed downstream of an evaporator (6) for detecting a first air temperature at the outlet side of the evaporator (6) and a control unit (10) for comparing the detected first air temperature with a first predetermined temperature and controlling in accordance with the comparison result the capacity of a compressor (2) connected to the evaporator (6), characterised in that the control apparatus further includes a second temperature detecting sensor (8) disposed upstream of the evaporator (6) for detecting a second air temperature at the inlet side of the evaporator (6), and the control unit (10) is arranged to compare the detected second air temperature with a second predetermined temperature and to control the capacity of the compressor in accordance with both comparison results.

2. Apparatus for controlling the capacity of a variable capacity compressor (2) connected to an evaporator (6) and having a compressor capacity changing means (11), the apparatus comprising a first temperature detector means (9) disposed, in use, in an airstream in thermal contact with the evaporator (6) so as to detect a first air temperature downstream of the evaporator (6); and a control means (10) for controlling the capacity changing means (11), the control means (10) including a first comparison means (STEP 5) for comparing a first predetermined temperature (T4) with the first air temperature and providing a first indication when the first air temperature is higher than the first predetermined temperature; characterised in that the apparatus further comprises a second temperature detecting means (8) disposed, in use, in the airstream so as to detect a second air temperature upstream of the evaporator (6); and in that the control means (10) further includes a second comparison means (STEP 7) for comparing the difference between the second air temperature and a second predetermined temperature (T1) with a predetermined temperature difference in response to the comparison by the first comparison means (STEP 5) and the presence of the first indication, the second comparison means (STEP 7) providing a second indication when the difference in temperature is greater than the predetermined temperature difference, wherein, in response to the second indication, the capacity changing means (11) ensures that the capacity of the compressor (2) is a large capacity; a third comparison means (STEP 8) for comparing the second air temperature with the second predetermined temperature in response to the comparison by the second comparison means (STEP 7) and the absence of the second indication, the third comparison means (STEP 8) providing a third indication when the second air temperature is higher than the second predetermined temperature, wherein in response to the third indication a third predetermined temperature (T2) is set to a first temperature and in the absence of the third indication the third predetermined temperature is set to a second temperature; a fourth comparison means (STEP 12) for comparing the first air temperature with the set third predetermined temperature and providing a fourth indication when the third predetermined temperature is higher than the first air temperature, wherein, in the absence of the fourth indication, the capacity changing means (11) ensures that the capacity of the compressor (2) is the large capacity, a fifth comparison means (STEP 14) for comparing the first air temperature with a fourth predetermined temperature (T3) in response to the comparison by the fourth comparison means (STEP 12) and the presence of the fourth indication, the fifth comparison means (STEP 14) providing a fifth indication when the first air temperature is higher than the fourth predetermined temperature, wherein, in response to the absence of the fifth indication, the capacity changing means (11) ensures that the capacity of the compressor (2) is a small capacity; and a sixth comparison means (STEP 16) for comparing the first air temperature with a fifth predetermined temperature (T5) in response to the comparison by the fifth comparison means (STEP 14) and the absence of the fifth indication, the sixth comparison means (STEP 16) providing a sixth indication when the first air temperature is higher than the fifth predetermined temperature, wherein, in response to the absence of the sixth indication, the capacity changing means (11) stops the operation of the compressor (2).

3. Apparatus according to claim 2, wherein the first temperature detecting means (9) and the second temperature detecting means (8) are controlled to detect the first air temperature and the second air temperature, respectively, in response to the comparison by the fourth comparison means (STEP 12) and the absence of the fourth indication, to the comparison by the fifth comparison means (STEP 14) and the presence of the fifth indication; or to the comparison by the sixth comparison means (STEP 16).

4. Apparatus according to claim 2 or claim 3, wherein the control means (10) further includes determination means (STEP 6) for determining, in response to the comparison by the first comparison means (STEP 5) and the absence of the first indication, whether the compressor (2) is operating, the determination means (STEP 6) providing a seventh indication when the compressor (2) is operating, and, in the absence of the seventh indication, the second comparison means (STEP 7) being controlled to make the comparison between the difference temperature and the predetermined temperature difference, and wherein the first temperature detecting means (9) and the second temperature detecting means means (8) are controlled to detect the first air temperature and the second air temperature, respectively, in response to the determination by the determination means (STEP 6) and the presence of the seventh indication.

5. Apparatus according to any one of the preceding claims 2–4, wherein, in response to the comparison by the second comparison means (STEP 7) and the presence of the second indication, the sixth comparison means (STEP 16) is controlled to make the comparison between the first air temperature and the fifth predetermined temperature.

6. Apparatus according to any one of the preceding claims 2–5, wherein the control means (10) initially controls the capacity control means (11) to operate the compressor (2) at the small capacity for an initial predetermined time before allowing comparison by the first comparison means (STEP 5).

7. A device according to claim 6, wherein the predetermined time is less than five seconds.

8. A device according to claims 4, 5, 6 or 7, wherein the temperatures of the predetermined temperatures increase from the fifth (T5) to the first (T4) to the fourth (T3) to the third (T2) to the second (T1) predetermined temperature.

9. Apparatus according to any one of the preceding claims 2–8, wherein the first temperature ($T2_{MIN}$) associated with the third predetermined temperature (T2) is less than the second temperature ($T2_{MAX}$) associated with the third predetermined temperature (T2).

10. Apparatus according to any one of the preceding claims 2–9, wherein the control means (10) is a microprocessor.

11. A device according to any one of the preceding claims 2–10, wherein the indications are control signals arranged so that the presence or absence of an indication corresponds to the presence or absence respectively of the respective control signal.

12. A method of controlling a compressor capacity changing means (11) of a variable capacity compressor (2) connected to an evaporator (6) in thermal contact with an airstream, the method comprising the steps of detecting (STEP 4) a first air temperature downstream of the evaporator (6); and comparing (STEP 5) a first predetermined temperature (T4) with the first air temperature and providing a first indication when the first air temperature is higher than the first predetermined temperature; characterised in that the method further comprises the steps of detecting (STEP 4) a second air temperature upstream of the evaporator (6); comparing (STEP 7) the difference between the second air temperature and a second predetermined temperature (T1) with a predetermined temperature difference in response to the presence of the first indication, providing a second indication when the difference in temperature is greater than the predetermined temperature difference, and, in response to the second indication, controlling (STEP 11) the capacity changing means (4) to ensure that the capacity of the compressor (2) is a large capacity; comparing (STEP 8) the second air temperature with the second predetermined temperature in response to the absence of the second indication, and providing a third indication when the second air temperature is higher than the second predetermined temperature, and, in response to the third indication, setting (STEP 10) a third predetermined temperature (T2) to a first temperature or, in the absence of the third indication, setting (STEP 9) the third predetermined temperature to a second temperature; comparing (STEP 12) the first air temperature with the set third predetermined temperature, providing a fourth indication when the third predetermined temperature is higher than the first air temperature, and, in the absence of the fourth indication, controlling (STEP 13) the capacity changing means (11) to ensure that the capacity of the compressor is the large capacity; comparing (STEP 14) the first air temperature with a fourth predetermined temperature (T3) in response to the presence of the fourth indication, providing a fifth indication when the first air temperature is higher than the fourth predetermined temperature, and, in response to the absence of the fifth indication, controlling (STEP 15) the capacity changing means (11) to ensure that the capacity of the compressor (2) is a small capacity; and comparing (STEP 16) the first air temperature with a fifth predetermined temperature (T5) in response to the absence of the fifth indication, providing a sixth indication when the first air temperature is higher than the fifth predetermined temperature, and, in response to the absence of the sixth indication, controlling (STEP 17) the capacity changing means (11) to stop the operation of the compressor (2).

13. A method according to claim 12, further comprising the step of making the detection (STEP 4) of the first and second air temperatures in response to the presence of the fifth or sixth indications or the absence of the fourth or sixth indications.

14. A method according to claim 12 or claim 13, further comprising the step of determining (STEP 6) in response to the absence of the first indication whether the compressor (2) is operating, providing a seventh indication when the compressor (2) is operating, and, in the absence of the seventh indication, making the comparison (STEP 7) between the difference temperature and the predetermined temperature difference; and the step of making the detection (STEP 4) of the first and second air temperatures in response to the presence of the seventh indication.

15. A method according to any one of the preceding claims 12–14, further comprising the step of, in response to the second indication, making the comparison (STEP 16) between the first air temperature and the fifth predetermined temperature.

16. A method according to any one of the preceding claims 12–15, further comprising the step of initially controlling (STEPS 2 and 3) the capacity control means (11) to operate the compressor (2) at the small capacity for an initial predetermined time (T) before allowing the comparison (STEP 5) between the first predetermined temperature and first air temperature.

17. A method according to any one of the preceding claims 12–16, in which the indications are control signals arranged so that the presence or absence of an indication corresponds to the presence or absence respectively of the respective control signal.

**Patentansprüche**

1. Steuereinrichtung mit einem ersten Temperaturerfassungssensor (9), der stromabwärts eines Verdampfers (6) zum Erfassen einer ersten Lufttemperatur an der Auslasseite des Verdampfers (6) angeordnet ist, und einer Steuereinheit (10) zum Vergleichen der erfassten ersten Lufttemperatur mit einer ersten vorbestimmten Temperatur und Steuern der Fördermenge eines mit dem Verdampfer verbundenen Kompressors (2) gemäss des Vergleichsresultates, dadurch gekennzeichnet, dass die Steuereinrichtung einen zweiten Temperaturerfassungssensor (8) enthält, der stromaufwärts des Verdampfers (6) zum Erfassen einer zweiten Lufttemperatur an der Einlasseite des Verdampfers (6) angeordnet ist, und die Steuereinheit (10) zum Vergleichen der erfassten zweiten Lufttemperatur mit einer zweiten vorbestimmten Temperatur und zum Steuern der Fördermenge des Kompressors gemäss beider Vergleichsresultate ausgebildet ist.

2. Einrichtung zum Steuern der Fördermenge eines Kompressors (2) mit variabler Fördermenge, der mit einem Verdampfer (6) verbunden ist und eine Einrichtung (11) zum Verändern der Kompressorfördermenge aufweist, wobei die Einrichtung eine erste Temperaturerfassungseinrichtung (9), die im Gebrauch in einem Luftstrom in thermischem Kontakt mit dem Verdampfer (6) so angeordnet ist, dass sie eine erste Lufttemperatur stromabwärts von dem Verdampfer (6) erfasst, und eine Steuereinrichtung (10) zum Steuern der Einrichtung (11) zur Fördermengenveränderung aufweist, die Steuereinrichtung (10) eine erste Vergleichseinrichtung (Schritt 5) zum Vergleichen einer ersten vorbestimmten Temperatur ($T_4$) mit der ersten Lufttemperatur und zum Vorsehen einer ersten Anzeige, wenn die erste Lufttemperatur höher als die erste vorbestimmte Temperatur ist, aufweist, dadurch gekennzeichnet, dass die Einrichtung weiterhin eine zweite Temperaturerfassungseinrichtung (8) aufweist, die im Gebrauch in dem Luftstrom so angeordnet ist, dass sie eine zweite Lufttemperatur stromaufwärts von dem Verdampfer (6) erfasst, und dass die Steuereinrichtung (10) weiterhin enthält: eine zweite Vergleichseinrichtung (Schritt 7) zum Vergleichen der Differenz zwischen der zweiten Lufttemperatur und einer zweiten vorbestimmten Temperatur ($T_1$) mit einer vorbestimmten Temperaturdifferenz als Reaktion auf den Vergleich durch die erste Vergleichseinrichtung (Schritt 5) und das Vorhandensein der ersten Anzeige, wobei die zweite Vergleichseinrichtung (Schritt 7) eine zweite Anzeige vorsieht, wenn die Temperaturdifferenz grösser als die vorbestimmte Temperaturdifferenz ist, worin als Reaktion auf die zweite Anzeige die Einrichtung (11) zum Fördermengenverändern sicherstellt, dass die Fördermenge des Kompressors (2) eine grosse Fördermenge ist; eine dritte Vergleichseinrichtung (Schritt 8) zum Vergleichen der zweiten Lufttemperatur mit der zweiten vorbestimmten Temperatur als Reaktion auf den Vergleich durch die zweite Vergleichseinrichtung (Schritt 7) und die Abwesenheit der zweiten Anzeige, wobei die dritte Vergleichseinrichtung (Schritt 8) eine dritte Anzeige vorsieht, wenn die zweite Lufttemperatur höher als die zweite vorbestimmte Temperatur ist, worin als Reaktion auf die dritte Anzeige eine dritte vorbestimmte Temperatur ($T_2$) auf eine erste Temperatur gesetzt wird und in der Abwesenheit der dritten Anzeige die dritte vorbestimmte Temperatur auf eine zweite Temperatur gesetzt wird; eine vierte Vergleichseinrichtung (Schritt 12) zum Vergleichen der ersten Lufttemperatur mit der gesetzten dritten vorbestimmten Temperatur und Vorsehen einer vierten Anzeige, wenn die dritte vorbestimmte Temperatur höher als die erste Lufttemperatur ist, worin in der Abwesenheit der vierten Anzeige die Einrichtung (11) zum Fördermengenverändern sicherstellt, dass die Fördermenge des Kompressors (2) eine grosse Fördermenge ist; eine fünfte Vergleichseinrichtung (Schritt 14) zum Vergleichen der ersten Lufttemperatur mit einer vierten vorbestimmten Temperatur ($T_3$) als Reaktion auf den Vergleich durch die vierte Vergleichseinrichtung (Schritt 12) und das Vorhandensein der vierten Anzeige, wobei die fünfte Vergleichseinrichtung (Schritt 14) eine fünfte Anzeige vorsieht, wenn die erste Lufttemperatur höher als die vierte vorbestimmte Temperatur ist, worin als Reaktion auf die Abwesenheit der fünften Anzeige die Einrichtung (11) zum Fördermengenverändern sicherstellt, dass die Fördermenge des Kompressors (2) eine kleine Fördermenge ist; und eine sechste Vergleichseinrichtung (Schritt 16) zum Vergleichen der ersten Lufttemperatur mit einer fünften vorbestimmten Temperatur ($T_5$) als Reaktion auf den Vergleich durch die fünfte Vergleichseinrichtung (Schritt 14) und die Abwesenheit der fünften Anzeige, wobei die sechste Vergleichseinrichtung (Schritt 16) eine sechste Anzeige vorsieht, wenn die erste Lufttemperatur höher ist als die fünfte vorbestimmte Temperatur, worin als Reaktion auf die Abwesenheit der sechsten Anzeige die Einrichtung (11) zur Fördermengenveränderung die Tätigkeit des Kompressors (2) stoppt.

3. Einrichtung nach Anspruch 2, in der die erste Temperaturerfassungseinrichtung (9) und die zweite Temperaturerfassungseinrichtung (8) so gesteuert sind, dass sie die erste Lufttemperatur bzw. die zweite Lufttemperatur als Reaktion auf den Vergleich durch die vierte Vergleichseinrichtung (Schritt 12) und die Abwesenheit der vierten Anzeige, auf den Vergleich durch die fünfte Vergleichseinrichtung (Schritt 14) und das Vorhandensein der fünften Anzeige oder auf den Vergleich der sechsten Vergleichseinrichtung (Schritt 16) erfasst.

4. Einrichtung nach Anspruch 2 oder Anspruch 3, in der die Steuereinrichtung (10) weiterhin enthält: eine Bestimmungseinrichtung (6) zum Bestimmen als Reaktion auf den Vergleich durch die erste Vergleichseinrichtung (Schritt 5) und die Abwesenheit der ersten Anzeige, ob der Kompressor (2) tätig ist, wobei die Bestimmungseinrichtung (Schritt 6) eine siebente Anzeige vorsieht, wenn der Kompressor (2) tätig ist, und in der Abwesenheit der siebenten Anzeige die zweite Vergleichseinrichtung (Schritt 7) so gesteuert ist, dass sie einen Vergleich zwischen der Temperaturdifferenz und der vorbestimmten Temperaturdifferenz durchführt, und worin die erste Temperaturerfassungseinrichtung (9) und die zweite Temperaturerfassungseinrichtung (8) so gesteuert sind, dass sie die erste Lufttemperatur bzw. die zweite Lufttemperatur erfassen als Reaktion auf die Bestimmung durch die Bestimmungseinrichtung (Schritt 6) und das Vorhandensein der siebenten Anzeige.

5. Einrichtung nach einem der vorhergehenden Ansprüche 2 bis 4, in der als Reaktion auf den Vergleich durch die zweite Vergleichseinrichtung (Schritt 7) und das Vorhandensein der zweiten Anzeige die sechste Vergleichseinrichtung (Schritt 16) so gesteuert ist, dass sie den Vergleich zwischen der ersten Lufttemperatur und der fünften vorbestimmten Temperatur durchführt.

6. Einrichtung nach einem der vorhergehenden Ansprüche 2 bis 5, in der die Steuereinrichtung (10) anfänglich die Einrichtung (11) zum Fördermengensteuern so steuert, dass der Kompressor (2) bei kleiner Fördermenge für eine anfängliche vorbestimmte Zeit tätig ist, bevor der Vergleich durch die erste Vergleichseinrichtung (Schritt 5) ermöglicht wird.

7. Eine Vorrichtung nach Anspruch 6, bei der die vorbestimmte Zeit weniger als fünf Sekunden beträgt.

8. Vorrichtung nach Anspruch 4, 5, 6 oder 7, in der die Temperaturen von den vorbestimmten Temperaturen von der fünften (T5) zu der ersten (T4) zu der vierten (T3) zu der dritten (T2) zu der zweiten (T1) vorbestimmten Temperatur ansteigt.

9. Einrichtung nach einem der vorhergehenden Ansprüche 2 bis 8, in der die erste Temperatur ($T2_{MIN}$), die mit der dritten vorbestimmten Temperatur (T2) assoziiert ist, geringer ist als die zweite Temperatur ($T2_{MAX}$), die mit der dritten vorbestimmten Temperatur (T2) assoziiert ist.

10. Einrichtung nach einem der vorhergehenden Ansprüche 2 bis 9, in der die Steuereinrichtung (10) ein Mikroprozessor ist.

11. Vorrichtung nach einem der vorhergehenden Ansprüche 2 bis 10, in der die Anzeigen Steuersignale sind, die so ausgelegt sind, dass das Vorhandensein oder die Abwesenheit einer Anzeige dem Vorhandensein bzw. der Abwesenheit des entsprechenden Steuersignales entspricht.

12. Verfahren zum Steuern einer Einrichtung (11) zum Verändern einer Kompressorfördermenge eines Kompressors (2) mit variabler Fördermenge, der mit einem Verdampfer (6) in thermischem Kontakt mit einem Luftstrom verbunden ist, wobei das Verfahren die Schritte des Erfassens (Schritt 4) einer ersten Lufttemperatur stromabwärts von dem Verdampfer (6) und Vergleichen (Schritt 5) einer ersten vorbestimmten Temperatur (T4) mit der ersten Lufttemperatur und Vorsehen einer ersten Anzeige, wenn die erste Lufttemperatur höher als die erste vorbestimmte Temperatur ist, aufweist, dadurch gekennzeichnet, dass das Verfahren weiter aufweist: die Schritte des Erfassens (Schritt 4) einer zweiten Lufttemperatur stromaufwärts von dem Verdampfer (6); Vergleichen (Schritt 7) der Differenz zwischen der zweiten Lufttemperatur und einer zweiten vorbestimmten Temperatur (T1) mit einer vorbestimmten Temperaturdifferenz als Reaktor auf das Vorhandensein der ersten Anzeige, Vorsehen einer zweiten Anzeige, wenn die Differenz in der Temperatur grösser als die vorbestimmte Temperaturdifferenz ist, und als Reaktion auf die zweite Anzeige Steuern (Schritt 11) der Einrichtung (4) zur Fördermengenveränderung zum Sicherstellen, dass die Fördermenge des Kompressors (2) eine grosse Fördermenge ist; Vergleichen (Schritt 8) der zweiten Lufttemperatur mit der zweiten vorbestimmten Temperatur als Reaktion auf die Abwesenheit der zweiten Anzeige und Vorsehen einer dritten Anzeige, wenn die zweite Lufttemperatur höher als die zweite vorbestimmte Temperatur ist, und als Reaktion auf die dritte Anzeige Setzen (Schritt 10) einer dritten vorbestimmten Temperatur (T2) auf eine erste Temperatur oder in der Abwesenheit der dritten Anzeige Setzen (Schritt 9) der dritten vorbestimmten Temperatur auf eine zweite Temperatur; Vergleichen (Schritt 12) der ersten Lufttemperatur mit der gesetzten dritten vorbestimmten Temperatur, Vorsehen einer vierten Anzeige, wenn die dritte vorbestimmte Temperatur höher als die erste Lufttemperatur ist, und in der Abwesenheit der vierten Anzeige Steuern (Schritt 13) der Einrichtung (11) zum Fördermengenverändern zum Sicherstellen, dass die Fördermenge des Kompressors eine grosse Fördermenge ist; Vergleichen (Schritt 14) der ersten Lufttemperatur mit einer vierten vorbestimmten Temperatur (T3) als Reaktion auf das Vorhandensein der vierten Anzeige, Vorsehen einer fünften Anzeige, wenn die erste Lufttemperatur höher als die vierte vorbestimmte Temperatur ist, und als Reaktion auf die Abwesenheit der fünften Anzeige Steuern (Schritt 15) der Einrichtung (11) zum Fördermengenverändern zum Sicherstellen, dass die Fördermenge des Kompressors (2) eine kleine Fördermenge ist; und Vergleichen (Schritt 16) der ersten Lufttemperatur mit einer fünften vorbestimmten Temperatur (T5) als Reaktion auf die Abwesenheit der fünften Anzeige, Vorsehen einer sechsten Anzeige, wenn die erste Lufttemperatur höher als die fünfte vorbestimmte Temperatur ist, und als Reaktion auf die Abwesenheit der sechsten Anzeige Steuern (Schritt 17) der Einrichtung (11) zum Fördermengenverändern zum Anhalten der Tätigkeit des Kompressors (2).

13. Verfahren nach Anspruch 12, mit dem Schritt des Durchführens der Erfassung (Schritt 4) der ersten und zweiten Lufttemperatur als Reaktion auf das Vorhandensein der fünften oder sechsten Anzeige oder der Abwesenheit der vierten oder sechsten Anzeige.

14. Verfahren nach Anspruch 12 oder Anspruch 13, mit dem Schritt des Bestimmens (Schritt 6) als Reaktion auf die Abwesenheit der ersten Anzeige, ob der Kompressor (2) tätig ist, Vorsehen einer siebenten Anzeige, wenn der Kompressor (2) tätig ist, und auf die Abwesenheit der siebenten Anzeige Durchführen des Vergleiches (Schritt 7) zwischen der Differenztemperatur und der vorbestimmten Temperaturdifferenz; und dem Schritt des Durchführens der Erfassung (Schritt 4) der ersten und zweiten Lufttemperatur als Reaktion auf das Vorhandensein der siebenten Anzeige.

15. Verfahren nach einem der vorhergehenden Ansprüche 12 bis 14, mit dem Schritt als Reaktion auf die zweite Anzeige des Durchführens des Vergleichens (Schritt 16) zwischen der ersten Lufttemperatur und der fünften vorbestimmten Temperatur.

16. Verfahren nach einem der vorhergehenden Ansprüche 12 bis 15, mit dem Schritt des anfänglichen Steuerns (Schritt 2 und 3) der Einrichtung (11) zur Kapazitätssteuerung zum Betreiben des Kompressors (2) bei der kleinen Fördermenge für eine anfängliche vorbestimmte Zeit (T), bevor der Vergleich (Schritt 5) zwischen der ersten vorbestimmten Temperatur und der ersten Lufttemperatur durchgeführt werden kann.

17. Verfahren nach einem der vorhergehenden Ansprüche 12 bis 16, in dem die Anzeigen Steuersignale sind, die so ausgebildet sind, dass das Vorhandensein oder die Abwesenheit einer Anzeige dem Vorhandensein bzw. der Abwesenheit des entsprechenden Steuersignales entspricht.

**Revendications**

1. Appareil de commande comprenant un premier détecteur de détection de température (9) disposé en aval d'un évaporateur (6) pour détecter une première température d'air à la sortie de l'évaporateur (6), et un bloc de commande (10) destiné à comparer la première température d'air détectée à une première température prédéterminée, et à régler, selon le résultat de la comparaison, la capacité d'un compresseur (2) relié à l'évaporateur (6), caractérisé en ce que l'appareil de commande comprend en outre un second détecteur de détection de température (8) disposé en amont de l'évaporateur (6) pour détecter une seconde température d'air à l'entrée de l'évaporateur (6), et en ce que le bloc de commande (10) est conçu pour comparer la seconde température d'air détectée à une seconde température prédéterminée, et pour régler la capacité du compresseur selon les résultats des deux comparaisons.

2. Appareil pour régler la capacité d'un compresseur à capacité variable (2) relié à évaporateur (6) et comportant des moyens de changement de capacité de compresseur (11), l'appareil comprenant un premier détecteur de température (9) disposé, en cours d'utilisation, dans un courant d'air en contact thermique avec l'évaporatuer (6) de manière à détecter une première température d'air en aval de l'évaporateur (6); et des moyens de commande (10) destinés à commander les moyens de changement de capacité (11), les moyens de commande (10) comprenant un premier dispositif de comparaison (ETAPE 5) pour comparer une première température prédéterminée (T4) à la première température d'air, et pour fournir une première indication, lorsque la première température d'air est supérieure à la première température prédéterminée; appareil caractérisé en ce qu'il comprend en outre des seconds moyens de détection de température (8) disposés, en cours d'utilisation, dans le courant d'air de manière à détecter une seconde température d'air en amont de l'évaporateur (6); et en ce que les moyens de commande (10) comprennent en outre un second dispositif de comparaison (ETAPE 7) pour comparer la différence entre la seconde température d'air et une seconde température prédéterminée (T1), à une différence de température prédéterminée en réponse à la comparaison effectuée par le premier dispositif de comparaison (ETAPE 5) et à la présence de la première indication, le second dispositif de comparaison (ETAPE 7) fournissant une seconde indication, lorsque la différence de température est supérieure à la différence de température prédéterminée, grâce à quoi, en réponse à la seconde indication, les moyens de changement de capacité (11) permettent de s'assurer que la capacité du compresseur (2) est une grande capacité; un troisième dispositif de comparaison (ETAPE 8) pour comparer la seconde température d'air à la seconde température prédéterminé en réponse à la comparaison effectuée par le second dispositif de comparaison (ETAPE 7) et à l'absence de la seconde indication, le troisième dispositif de comparaison (ETAPE 8) fournissant une troisième indication lorsque la seconde température d'air est supérieure à la seconde température prédéterminée, grâce à quoi, en réponse à la troisième indication, une troisième température prédéterminée (T2) est réglée à une première température et, en l'absence de la troisième indication, la troisième température prédéterminée est réglée à une seconde température; un quatrième dispositif de comparaison (ETAPE 12) pour comparer la première température d'air à la troisième température d'air prédéterminée, et pour fournir une quatrième indication lorsque la troisième température prédéterminée est supérieure à la première température d'air, grâce à quoi, en l'absence de la quatrième indication, les moyens de changement de capacité (11) permettent de s'assurer que la capacité du compresseur (2) est la grande capacité; un cinquième dispositif de comparaison (ETAPE 14) pour comparer la première température d'air à une quatrième température déterminée (T3) en réponse à la comparaison effectuée par le quatrième dispositif de comparaison (ETAPE 12) et à la présence de la quatrième indication, le cinquième dispositif de comparaison (ETAPE 14) fournissant une cinquième indication lorsque la première température d'air est supérieure à la quatrième température prédéterminée, grâce à quoi, en réponse à l'absence de la cinquième indication, les moyens de changement de capacité (11) permettent de s'assurer que la capacité du compresseur (2) est une petite capacité; et un sixième dispositif de comparaison (ETAPE 16) pour comparer la première température d'air à une cinquième température prédéterminée (T5) en réponse à la comparaison effectuée par le cinquième dispositif de comparaison (ETAPE 14), et à l'absence de la cinquième indication, le sixième dispositif de comparaison (ETAPE 16) fournissant une sixième indication, lorsque la première température d'air est supérieure à la cinquième température prédéterminée, grâce à quoi, en réponse à l'absence de la sixième indication, les moyens de changement de capacité (11) stoppent le fonctionnement du compresseur (2).

3. Appareil selon la revendication 2, caractérisé en ce que les premiers moyens de détection de température (9) et les seconds moyens de détection de température (8) sont commandés pour détecter respectivement la première température d'air et la seconde température d'air en réponse à la comparaison effectuée par le quatrième dispositif de comparaison (ETAPE 12) et à l'absence de la quatrième indication; à la comparaison effectuée par le cinquième dispositif de comparaison (ETAPE 14) et à l'absence de la cinquième indication; ou à la comparaison effectuée par le sixième dispositif de comparaison (ETAPE 16).

4. Appareil selon l'une quelconque des revendications 2 et 3, caractérisé en ce que les moyens de commande (10) comprennent en outre des moyens de détermination (ETAPE 6) pour déterminer, en réponse à la comparaison effectuée par le premier dispositif de comparaison (ETAPE 5) et à l'absence de la première indication, si le compresseur (2) est en fonctionnement, les moyens de détermination (ETAPE 6) fournissant une septième indication lorsque le compresseur (2) est en fonctionnement, et, en l'absence de la septième indication, le second dispositif de comparaison (ETAPE 7) étant commandé pour effectuer la comparaison entre la différence de température et la différence de température prédéterminée, et en ce que les premiers moyens de détection de température (9) et les seconds moyens de détection de température (8) sont commandés pour détecter respectivement la première température d'air et la seconde température d'air en réponse à la détermination effectuée par les moyens de détermination (ETAPE 6) et à la présence de la septième indication.

5. Appareil selon l'une quelconque des revendications 2 à 4 précédentes, caractérisé en ce que, en réponse à la comparaison effectuée par le second dispositif de comparaison (ETAPE 7) et à la présence de la seconde indication, le sixième dispositif de comparaison (ETAPE 16) est commandé pour effectuer la comparaison entre la première température d'air et la cinquième température prédéterminée.

6. Appareil selon l'une quelconque des revendications 2 à 5 précédentes, caractérisé en ce que les moyens de commande (10) commandent initialement les moyens de commande de capacité (11) pour faire fonctionner le compresseur (2) à la petite capacité pendant une période de temps initiale prédéterminée avant de laisser se faire la comparaison effectuée par le premier dispositif de comparaison (ETAPE 5).

7. Dispositif selon la revendication 6, caractérisé en ce que la période de temps prédéterminée est inférieure à cinq secondes.

8. Dispositif selon l'une quelconque des revendications 4, 5, 6, 7, caractérisé en ce que les valeurs des températures prédéterminées augmentent de la cinquième (T5) à la première (T4), puis à la quatrième (T3) à la troisième (T2) et à la seconde (T1) températures prédéterminées.

9. Appareil selon l'une quelconque des revendications 2 à 8 précédentes, caractérisé en ce que la première température (T2$_{MIN}$) associée à la troisième température prédéterminée (T2) est inférieure à la seconde température (T2$_{MAX}$) associée à la troisième température prédéterminée (T2).

10. Appareil selon l'une quelconque des revendications 2 à 9 précédentes, caractérisé en ce que les moyens de commande (10) sont constitués par un microprocesseur.

11. Dispositif selon l'une quelconque des revendications 2 à 10 précédentes, caractérisé en ce que les indications sont des signaux de commande conçus de façon que la présence ou l'absence d'une indication correspondent respectivement à la présence ou à l'absence du signal de commande correspondant.

12. Procédé de réglage des moyens de changement de capacité (11) d'un compresseur à capacité variable (2) relié à un évaporateur (6) en contact thermique avec un débit d'air, le procédé comprenant les différentes étapes consistant à détecter (ETAPE 4) une première température d'air en aval de l'évaporateur (6); et à comparer (ETAPE 5) une première température prédéterminée (T4) à la première température d'air, et à fournir une première indication lorsque la première température d'air est supérieure à la première température prédéterminée; procédé caractérisé en ce qu'il comprend en outre les étapes consistant à détecter (ETAPE 4) une seconde température d'air en amont de l'évaporateur (6), à comparer (ETAPE 7) la différence entre la seconde température d'air et une seconde température prédéterminée (T1) avec une différence de température prédéterminée en réponse à la présence de la première indication, à fournir une seconde indication, lorsque la différence de température est supérieure à la différence de température prédéterminée, et, en réponse à la seconde indication, à commander (ETAPE 11) les moyens de changement de capacité (4) pour s'assurer que la capacité du compresseur (2) est une grande capacité; à comparer (ETAPE 8) la seconde température d'air à la seconde température prédéterminée en réponse à l'absence de la seconde indication, et à fournir une troisième indication, lorsque la seconde température d'air est supérieure à la seconde température prédéterminée, et, en réponse à la troisième indication, à régler (ETAPE 10) une troisième température prédéterminée (T2) à une première température ou, en l'absence de la troisième indication, à régler (ETAPE 9) la troisième température prédéterminée à une seconde température; à comparer (ETAPE 12) la première température d'air à la troisième température prédéterminée réglée, à fournir une quatrième indication lorsque la troisième température, prédéterminée est supérieure à la première température d'air, et, en l'absence de la quatrième indication, à commander (ETAPE 13) les moyens de changement de capacité (11) pour s'assurer que la capacité du compresseur est la grande capacité; à comparer (ETAPE 14) la première température d'air à une quatrième température prédéterminée (T3) en réponse à l'absence de la quatrième indication, à fournir une cinquième indication lorsque la première température d'air est supérieure à la quatrième température prédéterminée, et, en réponse à l'absence de la cinquième indication, à commander (ETAPE 15) les moyens de changement de capacité (11) pour s'assurer que la capacité du compresseur (2) est une petite capacité; et à comparer (ETAPE 16) la première température d'air à une cinquième température prédéterminée (T5) en réponse à l'absence de la cinquième indication, à fournir une sixième indication, lorsque la première température d'air est supérieure à la cinquième température prédéterminée, et, en réponse à l'absence de la sixième indication, à commander (ETAPE 17) les moyens de changement de capacité (11) pour stopper le fonctionnement du compresseur (2).

13. Procédé selon la revendication 12, caractérisé en ce qu'il comprend en outre l'étape consistant à effectuer la détection (ETAPE 4) des première et seconde températures d'air en réponse à la présence des cinquième ou sixième indications, ou à l'absence des quatrième ou sixième indications.

14. Procédé selon l'une quelconque des revendications 12 et 13, caractérisé en ce qu'il comprend en outre l'étape consistant à déterminer (ETAPE 6), en réponse à l'absence de la première indication, si le compresseur (2) est en fonctionnement, à fournir une septième indication lorsque le compresseur (2) est en fonctionnement, et, en l'absence de la septième indication, à effectuer la comparaison (ETAPE 7) entre la différence de température et la différence de température prédéterminée; et l'étape consistant à effectuer la détection (ETAPE 4) des première et seconde températures d'air en réponse à la présence de la septième indication.

15. Procédé selon l'une quelconque des revendications 12 à 14 précédentes, caractérisé en ce qu'il comprend en outre l'étape consistant, en réponse à la seconde indication, à effectuer la comparaison (ETAPE 16) entre la première température d'air et la cinquième température prédéterminée.

16. Procédé selon l'une quelconque des revendications 12 à 15 précédentes, caractérisé en ce qu'il comprend en outre l'étape consistant à commander initialement (ETAPES 2 et 3) les moyens de capacité (11) pour faire fonctionner le compresseur (2) à la petite capacité pendant une période de temps initiale prédéterminée (T) avant de laisser s'effectuer la comparaison (ETAPE 5) entre la première température prédéterminée et la première température d'air.

17. Procédé selon l'une quelconque des revendications 12 à 16 précédentes, caractérisé en ce que les indications sont des signaux de commande conçus de façon que la présence ou l'absence d'une indication correspondent respectivement à la présence ou à l'absence du signal de commande correspondant.

EP 0 194 029 B1

1/4

Fig.1.

Fig.2.

AIR TEMPERATURE

TORQUE

*Fig. 4.*

PRIOR ART

THE INVENTION

$T_{air}$

$T_{ODB}$

T1
T2MAX
T2MIN
T3
T4
T5

SMALL CAPACITY · LARGE CAPACITY

TIME (HOURS)

TIME (HOURS)

AIR TEMPERATURE

TORQUE

*Fig. 3.*

TEMPERATURE AT INLET SIDE OF EVAPORATOR = $T_{air}$

PRIOR ART

THE INVENTION

TEMPERATURE AT OUTLET SIDE OF EVAPORATOR = $T_{ODB}$

$\Delta T$

T1
T2MAX
T2MIN
T3
T4
T5

SMALL CAPACITY · LARGE CAPACITY · SMALL CAPACITY

TIME (HOURS)

TIME (HOURS)

*Fig.6.*

AIR TEMPERATURE

TORQUE

*Fig.5.*

AIR TEMPERATURE

TORQUE